# FASCICULE DE BREVET EUROPEEN

(11) **EP 4 306 410 B1**
(45) Date de publication et mention de la délivrance du brevet: **15.01.2025**
(21) Numéro de dépôt: 23164249.7
(22) Date de dépôt: 27.03.2023
(51) Int. Cl.: B64C 25/58, F16F 9/02, B60G 15/08, B64C 25/60, F16F 9/32

(54) **ATTERRISSEUR MUNI D'UN SYSTEME AMORTISSEUR**
FAHRWERK MIT EINEM DÄMPFUNGSSYSTEM
LANDING GEAR PROVIDED WITH A SHOCK-ABSORBING SYSTEM

(30) Priorité: 12.07.2022 FR 2207121
(43) Date de publication de la demande: 17.01.2024
(73) Titulaire: Airbus Helicopters, 13725 Marignane Cedex (FR)
(72) Inventeur: BOULOUIS, Arnaud, 13100 AIX EN PROVENCE (FR)
(74) Mandataire: GPI Brevets

(56) Documents cités:
- CN-U- 203 979 249
- CN-U- 212 360 608
- US-A- 1 904 372
- US-A- 2 139 192
- US-A1- 2019 061 867

## Description

La présente invention concerne un atterrisseur muni d'un système amortisseur.

Classiquement, un aéronef comporte un train d'atterrissage. Le train d'atterrissage est parfois muni d'une pluralité d'atterrisseurs. Selon un exemple, le train d'atterrissage peut comporter deux atterrisseurs principaux et un atterrisseur auxiliaire, chacun pouvant être à balancier ou droit.

Un atterrisseur d'un aéronef peut comprendre au moins une roue et un amortisseur.

Par exemple, un atterrisseur à balancier peut comprendre une jambe de train oscillante dénommée plus simplement « balancier ». La jambe de train est articulée à une structure porteuse de l'aéronef et porte au moins une roue. La jambe de train peut être ainsi escamotée en vol dans une case de train. De plus, un atterrisseur à balancier connu peut comporter une contrefiche qui joue le rôle d'amortisseur et d'actionneur linéaire. La contrefiche est articulée à la jambe de train et à la structure porteuse. La contrefiche possède un vérin hydraulique de rétraction/déploiement associé à un amortisseur.

D'autres trains d'atterrissage sont de type atterrisseur à roue(s) qualifié de « droit », ou encore dit « à sonnette » ou « semi-articulé ». Ces trains d'atterrissage comprennent une jambe de train sensiblement verticale en position d'atterrissage, la jambe de train ayant un amortisseur.

Lors d'un atterrissage, l'amortisseur d'un atterrisseur se comprime puis se détend. L'amortisseur peut aussi être comprimé lorsque l'aéronef roule sur le sol.

Un amortisseur d'atterrisseur peut prendre la forme d'un amortisseur oléopneumatique qui produit de la raideur par la compression d'un gaz et de l'amortissement par laminage d'un liquide. L'amortisseur oléopneumatique comporte ainsi au moins une chambre remplie par un gaz ainsi qu'au moins deux chambres remplies par un liquide et séparées par une valve présentant au moins un passage de laminage mettant en communication les deux chambres entre elles.

Un tel amortisseur oléopneumatique est intéressant pour un atterrisseur en permettant de générer un effort de réaction particulier lors de sa compression. Durant une phase de compression, cet effort de réaction croît rapidement au début de la compression de l'amortisseur durant une phase dite de « pic de laminage », principalement par l'action du liquide au travers de la valve, lorsque la vitesse de compression de l'amortisseur est maximale comparée à l'ensemble de la séquence d'atterrissage. Cet effort croît ensuite plus lentement au fur et à mesure de la compression de l'amortisseur, lors d'une phase durant laquelle la vitesse de compression de l'amortisseur va décroître et l'effort de réaction résulte de manière de plus en plus prépondérante de la compression du gaz, jusqu'à un pic, et éventuellement décroît doucement avant de croître à nouveau vers ledit pic.

Un amortisseur oléopneumatique est ainsi parfaitement adapté aux besoins d'un atterrisseur en permettant d'absorber beaucoup d'énergie rapidement.

Un tel amortisseur oléopneumatique est dimensionné afin de d'absorber toute l'énergie requise, tout en minimisant à la fois le pic d'effort maximal et son encombrement en ajustant la course du piston. Toutefois, le réglage d'un tel amortisseur oléopneumatique peut être délicat.

La maintenance d'un tel amortisseur oléopneumatique peut en outre être délicate au sein d'un aéronef, voire peut nécessiter l'utilisation d'outillages spécifiques.

En outre, l'amortisseur oléopneumatique peut être défini pour limiter les risques de fuite du liquide. Des procédures peuvent être mises en place pour détecter une telle fuite avant un vol.

De plus, le comportement de l'amortisseur oléopneumatique peut varier en fonction de la température du liquide. Par exemple, la compression d'un amortisseur oléopneumatique peut varier entre deux atterrissages générant des énergies totales identiques, mais en présence de températures extérieures très différentes. En effet, la température a un effet non seulement sur la pression interne du gaz, mais également sur la viscosité du liquide, et dès lors sur l'amortissement résultant du laminage du liquide. Or, un aéronef est susceptible d'évoluer dans une large plage de températures. Un amortisseur oléopneumatique est donc dimensionné pour prendre en compte cette contrainte.

Par ailleurs, certains systèmes de laminage d'un liquide peuvent inclure des clapets délicats à définir en raison par exemple des tolérances de fabrication, des dispersions dans les raideurs des ressorts éventuellement utilisés, ou encore de la dilatation des matériaux dans une plage étendue de températures.

Un autre amortisseur oléopneumatique connu est muni d'un bloc pneumatique ayant deux chambres comprenant un gaz comprimé. Par exemple, un tel bloc pneumatique comporte dans un corps deux chambres remplies d'azote. Une première chambre est délimitée longitudinalement par un piston de commande solidaire d'une tige de puissance sortant du corps, et par un piston flottant. Une deuxième chambre est délimitée par le piston flottant et le corps. La première chambre et la deuxième chambre sont configurées pour être comprimées lorsque l'amortisseur oléopneumatique est comprimé. A cet effet, la pression régnant dans la deuxième chambre est supérieure à la pression régnant dans la première chambre au repos. Durant une phase de compression la tige de puissance s'enfonce dans le corps. Dans un premier temps, la pression régnant dans la première chambre augmente. Dès que la pression régnant dans la première chambre atteint la pression régnant dans la deuxième chambre, l'enfoncement dans le corps de la tige de puissance induit le déplacement du piston flottant, et donc désormais la compression de la première chambre et de la deuxième chambre. Un tel amortisseur oléopneumatique comporte alors un bloc pneumatique ayant deux chambres remplies de gaz qui travaillent en compression.

Un autre type d'amortisseur comporte des chambres remplies d'air et séparées par au moins un passage de laminage. Les documents CN 104632977, KR10-1070893, KR10-1551944 font référence à des systèmes à laminage d'air.

Les documents US 1 904 372 A, US 2 139 192 A, US 2019/061867 A1, CN 203 979 249 U, et CN 212 360 608 U sont aussi connus.

La présente invention a alors pour objet de proposer un système amortisseur alternatif visant à limiter les risques liés à l'utilisation de chambres remplies de liquide.

L'invention vise ainsi un atterrisseur muni d'au moins une roue coopérant avec un dispositif amortisseur.

Le dispositif amortisseur comporte un premier sous-ensemble amortisseur muni d'une première chambre remplie par un premier gaz, la première chambre étant délimitée par un premier corps et un premier piston mobile par rapport au premier corps pour conférer un premier volume variable à la première chambre étanche au premier gaz, ledit dispositif amortisseur comportant un deuxième sous-ensemble amortisseur muni d'une deuxième chambre remplie par un deuxième gaz, la deuxième chambre étant délimitée par un deuxième corps et par un deuxième piston mobile par rapport au deuxième corps pour conférer un deuxième volume variable à la deuxième chambre étanche au deuxième gaz, la première chambre présentant une première pression P1 qui est maximale dans une position de repos de l'atterrisseur précédent un atterrissage, la deuxième chambre présentant une deuxième pression P2 qui est minimale dans la position de repos, une première pression du premier gaz dans la première chambre diminuant lorsqu'une deuxième pression du deuxième gaz dans la deuxième chambre augmente suite à la position de repos lors d'un atterrissage.

Dès lors, le premier gaz reste dans la première chambre et le deuxième gaz reste dans la deuxième chambre lors de la compression et l'extension de l'amortisseur. La première pression régnant dans la première chambre induit un premier effort de réaction sur l'amortisseur, à savoir sur l'organe mobile parmi le premier piston ou le premier corps. De même, la deuxième pression régnant dans la deuxième chambre induit un deuxième effort de réaction sur l'amortisseur, à savoir sur l'organe mobile parmi le deuxième piston et/ou le deuxième corps.

Le deuxième effort de réaction résultant de la deuxième pression dans la deuxième chambre est dirigé selon un sens en opposition par rapport au sens du premier effort de réaction résultant de la première pression dans la première chambre. En outre, le deuxième effort de réaction est toujours supérieur au premier effort de réaction. Au repos, le premier effort de réaction est contré par le deuxième effort de réaction.

Eventuellement, le premier corps peut comprendre une première butée pour limiter le déplacement relatif selon un premier sens du premier piston par rapport au premier corps. La première butée empêche ainsi, par interférence de forme avec le premier piston, la première pression de dépasser la pression maximale à atteindre dans la position de repos, et assure une position au repos stable compte tenu que l'action de la deuxième chambre est prépondérante par rapport à l'action de la première chambre sur l'amortisseur. Par exemple, une telle première butée peut comprendre un épaulement.

Eventuellement, le deuxième corps peut comprendre une deuxième butée pour limiter le déplacement relatif selon un deuxième sens du deuxième piston par rapport au deuxième corps. La deuxième butée empêche ainsi, par interférence de forme avec le deuxième piston, la deuxième pression de devenir inférieure à la pression minimale à atteindre dans la position de repos, et assure une position au repos stable compte tenu que l'action de la deuxième chambre est prépondérante par rapport à l'action de la première chambre sur l'amortisseur. Par exemple, une telle deuxième butée peut comprendre un épaulement.

Par suite, le dispositif amortisseur est dépourvu d'un système de laminage d'un fluide ce qui permet d'éviter les inconvénients liés à cette technologie.

L'expression « d'au moins une roue coopérant avec un dispositif amortisseur » signifie que la ou les roues sont mécaniquement reliées au dispositif amortisseur, et directement ou indirectement à chaque sous-ensemble amortisseur, pour qu'un mouvement de la ou des roues par rapport à une structure porteuse de l'aéronef sollicite le dispositif amortisseur, par exemple à compter d'un seuil d'activation. Par exemple, lorsqu'un mouvement de la ou des roues engendre un effort sur le dispositif amortisseur atteignant un seuil, chaque sous-ensemble du dispositif amortisseur est activé pour fonctionner dans un premier temps selon une phase dite « phase d'enfoncement » par analogie à un amortisseur classique suivie d'une phase dite « phase de retour à la normale » par commodité.

Le dispositif amortisseur comporte de manière innovante une première chambre et une deuxième chambre remplies de gaz qui fonctionnent séparément, le premier gaz restant dans la première chambre et le deuxième gaz restant dans la deuxième chambre en fonctionnement, une chambre se détendant lorsque l'autre chambre se comprime. Un mouvement de la roue relativement à une structure porteuse de l'aéronef induit en effet un mouvement relatif du premier piston par rapport au premier corps, et du deuxième piston par rapport au deuxième corps.

Contrairement à un amortisseur usuel ayant deux chambres remplies de gaz qui se compriment, la première chambre et la deuxième chambre se comportent différemment. La première chambre se détend durant la « phase d'enfoncement » au fur et à mesure du rapprochement de la roue et de la structure porteuse de l'aéronef par exemple. A l'inverse, la deuxième chambre se comprime au cours de la « phase d'enfoncement ».

Ainsi, la deuxième chambre fonctionne classiquement en compression alors que la première chambre se détend. Le dispositif d'amortissement permet ainsi de générer lors de l'enfoncement d'une roue vers la structure porteuse un effort qui croît dans un premier temps rapidement, puis selon une pente plus faible. Ce dispositif amortisseur peut alors fonctionner d'une manière sensiblement équivalente à un amortisseur oléopneumatique usuel.

A l'issue de la « phase d'enfoncement », le dispositif amortisseur tend à retourner dans sa forme initiale durant la phase de retour à la normale. Eventuellement, le dispositif amortisseur peut comprendre au moins un système de freinage pour optimiser la détente.

L'atterrisseur peut de plus comporter une ou plusieurs des caractéristiques qui suivent, prises seules ou en combinaison.

Selon une possibilité, ladite au moins une roue peut être mobile conjointement avec le premier piston et le deuxième piston ou ladite au moins une roue peut être mobile conjointement avec le premier corps et le deuxième corps.

Pour obtenir un mouvement relatif des pistons et des corps, le déplacement de la ou les roues peut générer soit le déplacement du premier piston et du deuxième piston respectivement par rapport au premier corps et au deuxième corps, soit le déplacement du premier corps et du deuxième corps respectivement par rapport au premier piston et au deuxième piston.

Selon une possibilité compatible avec les précédentes, le premier gaz et le deuxième gaz peuvent être identiques.

Le premier gaz et le deuxième gaz peuvent être de l'azote par exemple.

Selon une première version compatible avec les possibilités précédentes, le premier sous-ensemble et le deuxième sous-ensemble peuvent être agencés en série. Le premier sous-ensemble et le deuxième sous-ensemble peuvent former un seul et même module amortisseur.

Par exemple, une tige de liaison peut s'étendre du premier piston au deuxième piston.

Le premier piston et le deuxième piston sont ainsi solidaires en translation en étant agencés l'un après l'autre selon la direction d'extension de la tige de liaison.

Selon une première alternative de la première version, une tige de commande peut être solidaire du premier piston, la tige de commande s'étendant dans la première chambre délimitée par le premier piston et en dehors des premier corps et deuxième corps, la tige de commande étant reliée mécaniquement à ladite au moins une roue ou à un support.

Le premier piston ou le deuxième corps est alors relié à la ou aux roues.

La tige de commande peut traverser le premier corps pour être reliée mécaniquement à ladite au moins une roue, le deuxième corps étant connecté audit support.

Des moyens d'étanchéité peuvent être disposés entre la tige de commande et le premier corps, et/ou entre le premier piston et le premier corps pour maintenir le premier gaz dans la première chambre. Par exemple, le premier corps porte un joint le long duquel coulisse la tige de commande. De même, des moyens d'étanchéité peuvent être disposés entre le deuxième piston et le deuxième corps pour maintenir le deuxième gaz dans la deuxième chambre.

Eventuellement, de l'huile est emprisonnée dans une cavité du premier corps, cette huile étant en contact avec la tige de commande. Cette huile a alors pour seule fonction d'assurer une lubrification et une amélioration de l'étanchéité, mais n'assure pas de fonction de laminage.

Alternativement, la tige de commande traverse le premier corps pour être reliée mécaniquement au support, le deuxième corps étant connecté à ladite au moins une roue.

Des moyens d'étanchéité peuvent être disposés entre la tige de commande et le premier corps, et/ou entre le premier piston et le premier corps pour maintenir le premier gaz dans la première chambre. Par exemple, le premier corps porte un joint le long duquel coulisse la tige de commande. De même, des moyens d'étanchéité peuvent être disposés entre le deuxième piston et le deuxième corps pour maintenir le deuxième gaz dans la deuxième chambre.

Eventuellement, de l'huile est emprisonnée dans une cavité du deuxième corps, cette huile étant en contact avec la tige de commande. Cette huile a alors pour seule fonction d'assurer une lubrification et une amélioration de l'étanchéité, mais n'assure pas de fonction de laminage.

Selon une deuxième alternative de la première version et en présence d'une tige de liaison, la tige de commande peut être articulée à la tige de liaison, la tige de commande étant reliée mécaniquement à ladite au moins une roue.

La tige de commande peut être une bielle articulée par une articulation à rotule à la tige de liaison. Cette deuxième alternative peut présenter l'avantage de ne pas nécessiter des moyens d'étanchéité entre la tige de commande et les corps.

Par exemple, au moins un des corps présente une rainure dans laquelle se déplace la tige de commande. Cette rainure est configurée pour être toujours située en dehors de la chambre délimitée par ce corps, et quelle que soit la position du piston respectif dans une plage de déplacement autorisée.

Selon une possibilité compatible avec les précédentes et la première version, le premier corps peut être solidaire du deuxième corps, voire le premier corps et le deuxième corps peuvent former un seul et même corps ouvert sur l'extérieur entre le premier piston et le deuxième piston.

Selon une possibilité compatible avec les précédentes et la première version, le premier piston peut comporter une première surface en contact avec le premier gaz, le deuxième piston comportant une deuxième surface en contact avec le deuxième gaz, un premier produit d'une première superficie S1 de la première surface et de la première pression P1 maximale dans la position de repos étant inférieur à un deuxième produit d'une deuxième superficie S2 de la deuxième surface et de la deuxième pression P2 minimale dans la position de repos soit P1*S1<P2*S2.

Les superficies de ces surfaces de contact et les pressions des gaz dans les chambres permettent de garantir que la première chambre ne se détendra pas en l'absence d'un effort seuil généré lors d'un atterrissage. Seul l'enfoncement de la ou des roues vers la cellule de l'aéronef va générer l'activation du dispositif amortisseur et le commencement de la phase d'enfoncement.

Selon une deuxième version, le premier sous-ensemble et le deuxième sous-ensemble peuvent être agencés en parallèle.

Selon cette deuxième version, le premier sous-ensemble et le deuxième sous-ensemble peuvent former deux modules amortisseurs distincts.

Par exemple, l'atterrisseur peut comporter alors une jambe de train mobile en rotation autour d'un axe de pivotement, la jambe de train portant ladite au moins une roue, une première connexion mécanique s'étendant du premier piston ou du premier corps à la jambe de train, une deuxième connexion mécanique s'étendant du deuxième piston ou du deuxième corps à la jambe de train, la première connexion mécanique et la deuxième connexion mécanique étant articulées à la jambe de train de part et d'autre de l'axe de pivotement.

La deuxième connexion mécanique peut par exemple être articulée à la jambe de train entre l'axe de pivotement et un axe de rotation de ladite au moins une roue par rapport à la jambe de train.

Cette architecture peut notamment présenter de fait un intérêt au sein d'un atterrisseur à balancier. De plus, cette architecture peut faciliter l'agencement du dispositif amortisseur, en particulier au sein d'un aéronef existant.

Selon une possibilité compatible avec les précédentes et la deuxième version, le premier piston peut comporter une première surface en contact avec le premier gaz, le deuxième piston comportant une deuxième surface en contact avec le deuxième gaz, un premier produit d'une première superficie S1 de la première surface et de la première pression P1 maximale et d'une première distance D1 entre la première connexion mécanique et l'axe de pivotement dans la position de repos étant inférieur à un deuxième produit d'une deuxième superficie S2 de la deuxième surface et de la deuxième pression P2 minimale et d'une deuxième distance D2 entre la deuxième connexion mécanique et l'axe de pivotement dans la position de repos soit P1 *S1 *D1 <P2*S2*D2.

Les superficies de ces surfaces de contact, les pressions des gaz dans les chambres, la première distance et la deuxième distance permettent de garantir que la première chambre ne se détendra pas en l'absence d'un effort seuil généré lors d'un atterrissage. Seul l'enfoncement de la ou des roues vers la cellule de l'aéronef va générer l'activation du dispositif amortisseur et le commencement de la phase d'enfoncement.

Selon une possibilité compatible avec les précédentes et quelle que soit la version éventuelle, au moins un des premier piston et deuxième piston peut comprendre une cavité annulaire ouverte sur le premier corps ou le deuxième corps respectif, un fluide de lubrification étant maintenu dans ladite cavité.

Le fluide peut être maintenu dans une cavité par des joints.

Le premier piston et/ou le deuxième piston comprennent alors une cavité remplie d'un fluide en contact contre une face interne du corps respectif. Ce fluide peut être de l'huile par exemple. Le fluide a uniquement pour fonction d'optimiser les frottements entre le piston concerné et le corps respectif, et n'assure aucune fonction de type laminage. Une quantité faible de fluide peut alors être utilisée.

Par ailleurs, un aéronef peut être muni d'au moins un atterrisseur selon l'invention.

L'invention et ses avantages apparaîtront avec plus de détails dans le cadre de la description qui suit avec des exemples donnés à titre illustratif en référence aux figures annexées qui représentent :
la figure 1, un exemple d'atterrisseur droit selon l'invention,
la figure 2, un exemple d'atterrisseur à balancier selon l'invention,
la figure 3, un exemple d'atterrisseur droit selon l'invention,
la figure 4, un exemple d'atterrisseur selon l'invention,
la figure 5, un dispositif amortisseur avant atterrissage,
la figure 6, le dispositif amortisseur de la figure 5 durant l'atterrissage,
la figure 7, le dispositif amortisseur de la figure 5 et de la figure 6 durant l'atterrissage avec une course plus importante,
la figure 8, un exemple d'atterrisseur à balancier selon l'invention au moment du contact avec le sol,
la figure 9, l'atterrisseur à balancier de la figure 8 durant l'atterrissage, et
la figure 10, un diagramme illustrant le fonctionnement d'un atterrisseur selon l'invention comparé à un atterrisseur ayant un amortisseur oléopneumatique de l'art antérieur.

Les éléments présents dans plusieurs figures distinctes sont affectés d'une seule et même référence.

Les figures présentent divers exemples d'un atterrisseur 10 porté par une cellule 90 d'un aéronef 1 selon l'invention. L'aéronef 1 peut être par exemple un avion, un giravion ou autres. La cellule 90 est représentée schématiquement pour ne pas alourdir inutilement les figures pour des raisons de concision.

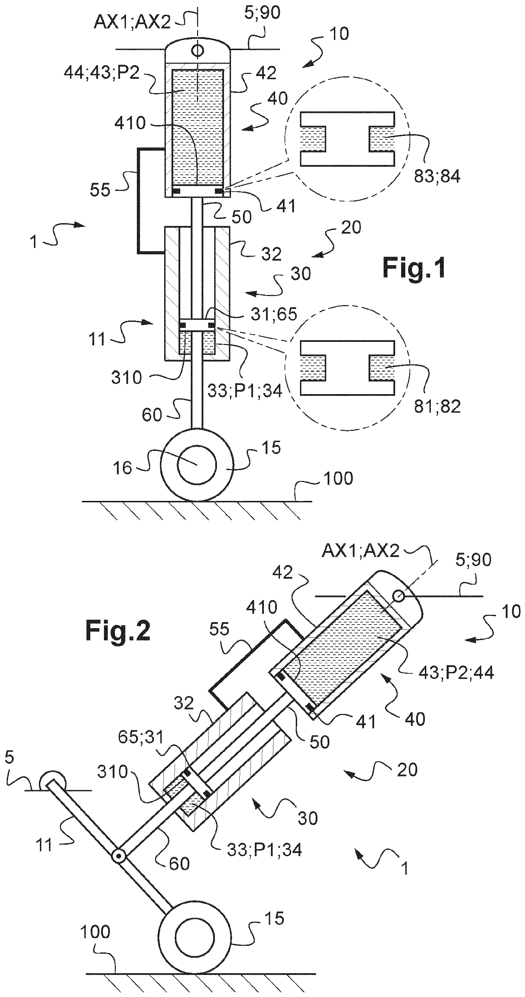

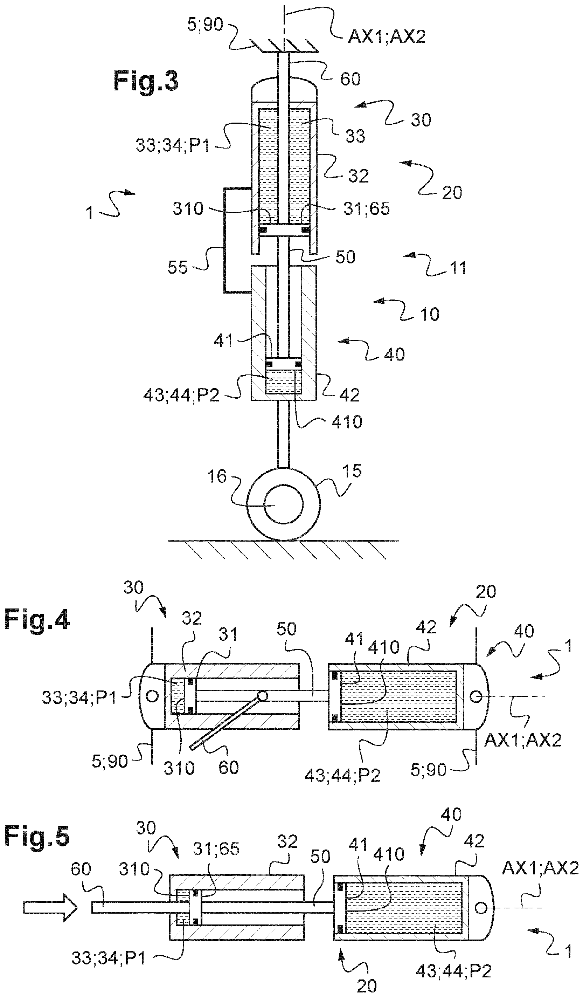

Quel que soit l'exemple et en référence à la figure 1, un tel atterrisseur 10 est muni d'au moins une roue 15 mobile en rotation autour d'un axe de rotation 16, et par exemple d'une roue 15 ou de deux roues 15. La ou les roues 15 peuvent être portées par une jambe de train 11 plus ou moins complexe. Au sol, la jambe de train 11 peut être sensiblement verticale par rapport au sol 100 tel qu'illustré sur les exemples des figures 1 et 3 ou peut présenter une autre inclinaison tel qu'illustré sur les exemples des figures 2, 8 et 9. La jambe de train 11 peut éventuellement être rétractable à l'aide d'un système usuel.

Quel que soit l'exemple et en référence à la figure 1, l'atterrisseur 10 est muni d'un dispositif amortisseur 20 pour amortir le déplacement de la cellule 90 de l'aéronef 1 vers le sol, lors d'un atterrissage ou du roulage de l'aéronef sur le sol 100.

Le dispositif amortisseur 20 peut être une partie intégrante de la jambe de train 11 tel qu'illustré sur les exemples des figures 1 et 3, ou peut coopérer avec la jambe de train 11 selon les exemples des figures 2, 4, 8 et 9.

Indépendamment de la relation entre le dispositif amortisseur 20 et la jambe de train 11 et en référence à la figure 1 notamment, le dispositif amortisseur 20 comporte un premier sous-ensemble amortisseur 30. Ce premier sous-ensemble amortisseur 30 comprend une première chambre 33. La première chambre 33 est délimitée par un premier corps 32 et un premier piston 31 mobile dans un premier logement longitudinal du premier corps 32 pour conférer un premier volume variable à la première chambre 33. Par exemple, le premier corps 32 a la forme d'un premier tube s'étendant d'une zone d'extrémité obturée par un premier fond jusqu'à une première extrémité ouverte. La première chambre 33 est alors délimitée longitudinalement selon un premier axe AX1 par le premier fond et le premier piston 31, et radialement par rapport au premier axe AX1 par le premier tube. La première chambre 33 est remplie de manière étanche par un premier gaz 34, une première pression P1 régnant dans la première chambre 33, et donc une première pression P1 du premier gaz 34, variant en fonction de la position relative du premier piston 31 par rapport au premier corps 32. Une première surface 310 du premier piston est en contact contre le premier gaz 34.

De plus, le dispositif amortisseur 20 comporte un deuxième sous-ensemble amortisseur 40. Ce deuxième sous-ensemble amortisseur 40 comprend une deuxième chambre 43. La deuxième chambre 43 est délimitée par un deuxième corps 42 et un deuxième piston 41 mobile dans un deuxième logement longitudinal du deuxième corps 42 pour conférer un deuxième volume variable à la deuxième chambre 43. Par exemple, le deuxième corps 42 a la forme d'un deuxième tube s'étendant d'une zone d'extrémité obturée par un deuxième fond jusqu'à une deuxième extrémité ouverte. La deuxième chambre 43 est alors délimitée longitudinalement selon un deuxième axe AX2 par le deuxième fond et le deuxième piston 41, et radialement par rapport au deuxième axe AX2 par le deuxième tube. La deuxième chambre 43 est remplie de manière étanche par un deuxième gaz 44, une deuxième pression P2 régnant dans la deuxième chambre 43, et donc du deuxième gaz 44, variant en fonction de la position du deuxième piston 41 par rapport au deuxième corps 42. Une deuxième surface 410 du deuxième piston est en contact contre le deuxième gaz 44.

Le premier gaz 34 et le deuxième gaz 44 peuvent être identiques, et par exemple peuvent être de l'azote.

Le premier corps et le deuxième corps peuvent par ailleurs comprendre des valves non représentées pour remplir la première chambre et la deuxième chambre, voire pour faire des mesures de pression dans le cadre d'une maintenance simple. Un défaut de pression peut alors engendrer un nouveau remplissage des chambres, voire le remplacement de joints éventuels.

Eventuellement, au moins un des premier piston 31 et deuxième piston 41 peut comprendre une cavité 81, 83 annulaire ouverte sur le premier corps 32 ou le deuxième corps 42 respectif. Un fluide de lubrification 82, 84 est maintenu dans la cavité 81, 83 entre le piston 31,41 et le corps 32,42 correspondant, éventuellement en utilisant des joints non représentés pour ne pas alourdir les figures.

Ainsi, une tranche du premier piston 31 coulissant le long du premier corps 32, et notamment du premier tube, peut comprendre une première cavité 81 annulaire. Un premier fluide de lubrification 82, de l'huile par exemple, remplit alors la première cavité 81.

Optionnellement, une tranche du deuxième piston 41 coulissant le long du deuxième corps 42, et notamment du deuxième tube, peut comprendre une deuxième cavité 83 annulaire. Un deuxième fluide de lubrification 84, de l'huile par exemple, remplit alors la deuxième cavité 83.

Indépendamment de ces options, quelle que soit la manière de réaliser le dispositif amortisseur 20, la première pression P1 dans la première chambre 33 est maximale dans une position de repos de l'atterrisseur 10 précédent un atterrissage, en étant égale à une pression dite « pression maximale ». Le premier gaz 34 exerce un effort sur la première surface 310 tendant à déplacer le premier piston 31 pour augmenter le premier volume de la première chambre 33. Pour toute autre position du premier piston que la position atteinte dans la position de repos et notamment lors d'une phase d'enfoncement, la première pression P1 sera alors inférieure à la pression maximale P1max.

A l'inverse, la deuxième pression P2 dans la deuxième chambre 43 est minimale dans cette position de repos, en étant égale à une pression minimale. Pour toute autre position du deuxième piston que la position atteinte dans la position de repos et notamment lors d'une phase d'enfoncement, la deuxième pression P2 sera alors supérieure à la pression minimale P2min.

Optionnellement, la première surface 310 du premier piston 31 peut selon un autre aspect avoir une première superficie S1 différente d'une deuxième superficie S2 de la deuxième surface 410 du deuxième piston 41.

Par ailleurs, le premier piston 31 ainsi que le deuxième piston 41 et la ou les roues 15 portées ou le premier corps 32 ainsi que le deuxième corps 42 et la ou les roues 15 portées sont éventuellement mobiles conjointement. Ainsi un rapprochement de la ou des roues 15 et de la cellule 90 lors d'une phase d'atterrissage ou lors du roulage de la ou des roues 15 sur une pierre ou un équivalent induit concomitamment le déplacement relatif du premier piston 31 par rapport au premier corps 32 et du deuxième piston 41 par rapport au deuxième corps 42. Dès lors, la première pression P1 du premier gaz 34 dans la première chambre 33 baisse alors que la deuxième pression P2 du deuxième gaz 44 dans la deuxième chambre 43 augmente lors d'une phase d'enfoncement, et inversement lors d'une phase de retour à la normale.

Selon la première version illustrée sur les figures 1 à 7, une tige de liaison 50 solidarise le premier piston 31 au deuxième piston 41. La tige de liaison 50 s'étend d'une extrémité solidaire du premier piston 31 jusqu'à une deuxième extrémité solidaire du deuxième piston 41. L'ensemble formé par le premier piston 31, la tige de liaison 50 et le deuxième piston 41 peut être monobloc ou constitué de plusieurs pièces mécaniques fixées les unes aux autres.

Le premier axe AX1 et le deuxième axe AX2 peuvent être confondus. Le premier axe AX1 et le deuxième axe AX2 peuvent former des axes de symétrie respectivement du premier corps 32 et du deuxième corps 42.

Eventuellement, le premier logement longitudinal et le deuxième logement longitudinal peuvent être en regard l'un de l'autre.

Eventuellement, le premier corps 32 peut être rendu solidaire du deuxième corps 42 par un ou des liens 55.

En outre, au moins un des premier sous-ensemble amortisseur 30 et deuxième sous-ensemble amortisseur 40 peut être attaché à un support 5 de la cellule 90.

Dès lors, selon cette première version, le premier sous-ensemble amortisseur 30 et le deuxième sous-ensemble amortisseur 40 sont agencés en série.

Par ailleurs, la première superficie S1, la pression maximale P1max, la deuxième superficie S2 et la pression minimale P2min peuvent être définies afin qu'un premier produit de la première superficie S1 et de la pression maximale P1 max soit inférieur à un deuxième produit de la deuxième superficie S2 et de la pression minimale P2min.

Selon une première alternative de la première version illustrée par les exemples des figures 1 à 3, une tige de commande 60 est solidaire d'un piston de référence 65, ce piston de référence 65 étant le premier piston 31. Dès lors, la tige de commande 60 s'étend dans la première chambre 33 délimitée par le piston de référence 65 et en dehors du premier corps 32, et de fait du deuxième corps 42. La partie de la tige de commande 60 en dehors de la première chambre est alors reliée mécaniquement à la ou aux roues 15 de l'atterrisseur 10 ou à un support 5 de la cellule 90.

Selon les exemples des figures 1 et 2, la tige de commande 60 s'étend alors dans la première chambre 33 et traverse une paroi du premier corps 31, en particulier le premier fond précité. Par suite, la tige de commande 60 est reliée à la ou aux roues 15 de manière usuelle, et par exemple à une fusée de roue selon la figure 1 ou à une jambe de train 11 portant une fusée de roue selon la figure 2. A l'inverse, le deuxième corps 42 est relié à un support 5, éventuellement via notamment une articulation.

Selon l'exemple de la figure 3, la tige de commande 60 s'étend alors dans la première chambre 33 et traverse une paroi du premier corps 31, en particulier le premier fond précité. Par suite, la tige de commande 60 est reliée à un support 5 de la cellule 90, éventuellement via notamment une articulation. Le deuxième corps 42 est au contraire relié à la ou aux roues 15 de manière usuelle, et par exemple à une fusée de roue.

Selon une deuxième alternative de la première version illustrée par l'exemple de la figure 4, une tige de commande 60 est articulée à la tige de liaison 50. La tige de commande 60 est alors connectée mécaniquement à la ou aux roues 15, et par exemple via une fusée de roue voire une jambe de train 11.

Le premier corps 32 et/ou le deuxième corps 42 peuvent comprendre une rainure dans laquelle la tige de commande 60 peut notamment coulisser. Un effort exercé sur la tige de commande 60 lors d'un déplacement de la ou des roues 15 induit alors un effort dans la tige de liaison 50, et inversement.

Les figures 5 à 7 illustrent le fonctionnement du dispositif amortisseur 20 de la première version. Le dispositif amortisseur 20 correspondant à celui de la figure 1, mais les explications suivantes s'appliquent aux autres exemples.

En référence à la figure 5, le dispositif amortisseur 20 se trouve dans une position de repos juste avant que la ou les roues 15 touchent le sol avant l'atterrissage. Le gaz présent dans la première chambre 33 est comprimé alors que le gaz présent dans la deuxième chambre 43 est détendu.

Lorsque la ou les roues 15 de l'atterrisseur 10 touchent le sol, cette ou ces roues 15 tendent à se rapprocher de la cellule 90. Le dispositif amortisseur 20 est sollicité lors d'une phase d'enfoncement dès qu'un effort exercé sur le dispositif amortisseur 20 atteint un seuil.

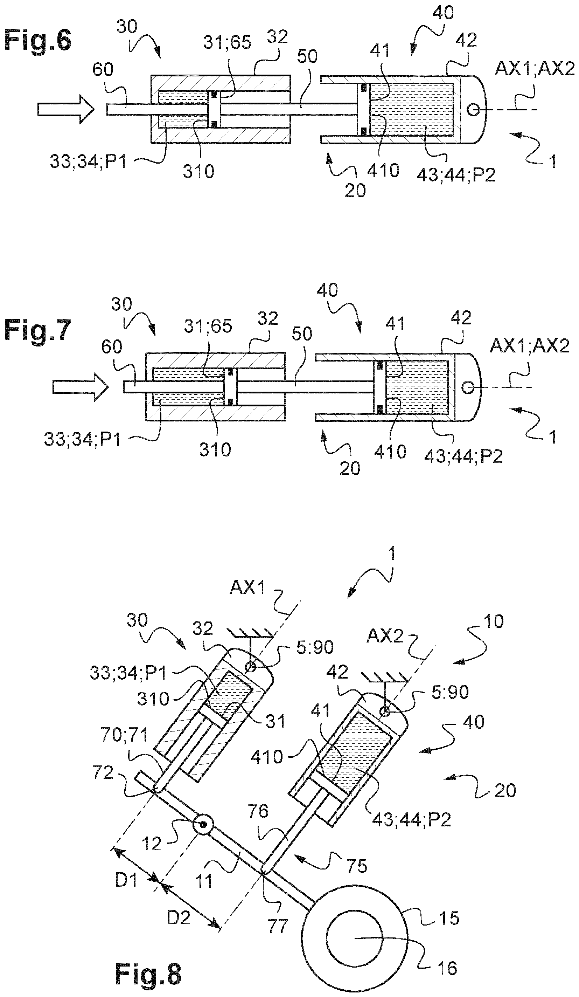

En référence à la figure 6, le premier piston 31 s'éloigne selon la flèche illustrée du premier fond, alors qu'au contraire le deuxième piston 41 se rapproche du deuxième fond. Le premier gaz reste dans la première chambre et le deuxième gaz reste dans la deuxième chambre. La première pression P1 dans la première chambre 33 baisse alors que la deuxième pression P2 dans la deuxième chambre 43 augmente. Le dispositif amortisseur 20 dans son ensemble génère alors un effort qui croît très rapidement, le dispositif amortisseur absorbant un maximum d'énergie.

En référence à la figure 7, ce mouvement se poursuit jusqu'à un maximum. Le dispositif amortisseur 20 dans son ensemble génère alors un effort qui croît plus lentement.

A l'issue de la phase d'enfoncement, le dispositif amortisseur 20 fonctionne selon une phase de retour à la normale et tend à retourner dans sa forme initiale. Eventuellement, le dispositif amortisseur peut comprendre au moins un système de freinage pour optimiser la détente, et éviter un phénomène de rebond.

Selon une deuxième version illustrée sur la figure 8, l'atterrisseur 10 comporte une jambe de train 11 mobile en rotation autour d'un axe de pivotement 12. Cette jambe de train 11 porte une ou des roues 15.

Selon cette deuxième version, le premier sous-ensemble amortisseur 30 et le deuxième sous-ensemble amortisseur 40 sont agencés en parallèle. Contrairement à la première version, le premier sous-ensemble amortisseur 30 et le deuxième sous-ensemble amortisseur 40 sont dissociés.

Dès lors, le premier sous-ensemble amortisseur 30 est articulé à un support 5 de la cellule 90. De plus, le premier sous-ensemble amortisseur 30 est articulé par une première connexion mécanique 70 à la jambe de train 11. Une première distance D1 sépare le long de la jambe de train 11 l'axe de pivotement 12 et la première connexion mécanique 70, et par exemple une première articulation 72 à pivot ou rotule de la première connexion mécanique 70 et l'axe de pivotement 12. Dans l'alternative à « corps fixe et piston mobile » illustrée, la première connexion mécanique 70 s'étend du premier piston 31 à la jambe de train 11. Cette première connexion mécanique 70 comporte par exemple un premier arbre 71 solidaire du premier piston 31 et articulé par une première articulation 72 à pivot ou rotule à la jambe de train 11, le premier corps 32 pouvant être articulé à un support 5 de la cellule 90. Selon un autre exemple à « corps mobile et piston fixe » non illustré pour ne pas multiplier les figures, la première connexion mécanique 70 comporte par exemple un premier arbre solidaire du premier corps 32 et articulé par une première articulation 72 à pivot ou rotule à la jambe de train 11, le premier piston 31 pouvant être solidaire d'une première tige articulée à un support 5 de la cellule 90.

Le deuxième sous-ensemble amortisseur 40 est articulé à un support 5 de la cellule 90. De plus, le deuxième sous-ensemble amortisseur 40 est articulé par une deuxième connexion mécanique 75 à la jambe de train 11. Une deuxième distance D2 sépare le long de la jambe de train 11 l'axe de pivotement 12 et la deuxième connexion mécanique 75, et par exemple une deuxième articulation 77 à pivot ou rotule de la deuxième connexion mécanique 75 et l'axe de pivotement 12. Dans l'alternative à « corps fixe et piston mobile » illustrée, la deuxième connexion mécanique 75 s'étend du deuxième piston 41 à la jambe de train 11. Cette deuxième connexion mécanique 75 comporte par exemple un deuxième arbre 76 solidaire du deuxième piston 41 et articulé par une deuxième articulation 77 à pivot ou rotule à la jambe de train 11, le deuxième corps 42 pouvant être articulé à un support 5 de la cellule 90. Selon un autre exemple à « corps mobile et piston fixe » non illustré pour ne pas multiplier les figures, la deuxième connexion mécanique 75 comporte par exemple un deuxième arbre solidaire du deuxième corps 42 et articulé par une deuxième articulation 77 à pivot ou rotule à la jambe de train 11, le deuxième piston 41 pouvant être solidaire d'une deuxième tige articulée à un support 5 de la cellule 90.

Par ailleurs, la première superficie S1, la pression maximale P1max, la deuxième superficie S2 et la pression minimale P2min ainsi que la première distance D1 et la deuxième distance D2 peuvent être définies afin qu'un premier produit de la première superficie S1 et de la pression maximale P1 max et de la première distance D1 soit inférieur à un deuxième produit de la deuxième superficie S2 et de la pression minimale P2min et de la deuxième distance D2.

Quelle que soit l'alternative, la première connexion mécanique 70 et la deuxième connexion mécanique 75 sont articulées à la jambe de train 11 de part et d'autre de l'axe de pivotement 12.

En particulier, la deuxième connexion mécanique 75 est articulée à la jambe de train 11 entre l'axe de pivotement 12 et l'axe de rotation 16 de la ou des roues 15 par rapport à la jambe de train 11 selon l'alternative à « corps fixe et piston mobile » illustrée. L'inverse est possible, par exemple pour l'alternative à « corps mobile et piston fixe ».

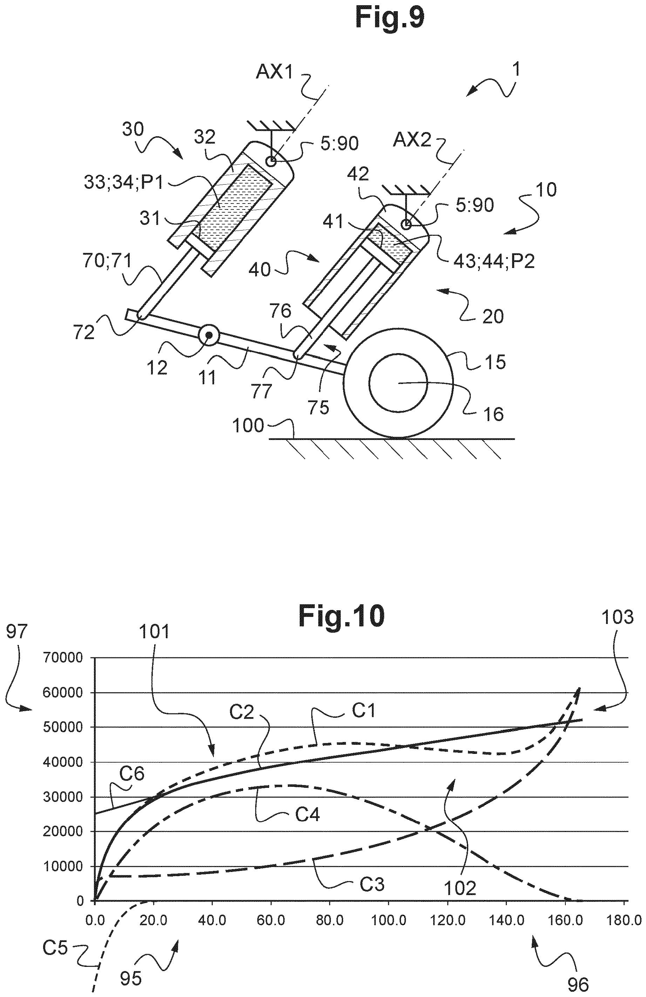

La figure 8 présente l'atterrisseur 10 dans la position de repos alors que la figure 9 présente l'atterrisseur 10 lors de la remontée de la ou des roues 15 vers la cellule 90.

Quelle que soit la version, un atterrisseur 10 selon l'invention fonctionne de manière sensiblement équivalente à un atterrisseur ayant un amortisseur oléopneumatique.

La figure 10 comporte un diagramme 95 présentant en abscisse le déplacement d'une roue et en ordonnée l'effort de réaction généré par un dispositif amortisseur. La première courbe C1 présente l'évolution de l'effort de réaction provoqué par un amortisseur oléopneumatique. En particulier, l'effort de réaction provoqué par un amortisseur oléopneumatique classique correspond sensiblement à la somme de l'effort de réaction provoqué par la partie pneumatique de l'amortisseur oléopneumatique et illustré par la courbe C3 et de l'effort de réaction provoqué par le laminage d'un liquide de l'amortisseur oléopneumatique et illustré par la courbe C4.

La deuxième courbe C2 présente l'évolution de l'effort de réaction provoquée par un dispositif amortisseur 20 du type de l'invention L'effort de réaction provoqué par l'amortisseur oléopneumatique de l'invention correspond sensiblement à la somme de l'effort de réaction provoqué par la détente de la première chambre de l'amortisseur oléopneumatique et illustré par la courbe C5 et de l'effort de réaction provoqué par la compression de la deuxième chambre et illustré par la courbe C6.

Durant une phase d'enfoncement initiale 101, la première courbe C1 et la deuxième courbe C2 croissent rapidement de manière similaire. Durant une phase d'enfoncement intermédiaire 102 et une phase d'enfoncement finale 103, la première courbe C1 et la deuxième courbe C2 évoluent différemment mais sont sensiblement équivalentes.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

Par exemple, le premier piston 31 et/ou le deuxième piston 41 des figures 8 et 9 peuvent comprendre une cavité 81, 83 logeant un fluide de lubrification 82, 84 à l'instar de l'exemple de la figure 1. A l'inverse, le premier piston 31 et/ou le deuxième piston 41 des figures 1 à 7 peuvent en être dépourvus.

## Revendications

1. Atterrisseur (10) muni d'au moins une roue (15) coopérant avec un dispositif amortisseur (20),
dans lequel ledit dispositif amortisseur (20) comporte un premier sous-ensemble amortisseur (30) muni d'une première chambre (33) remplie par un premier gaz (34), la première chambre (33) étant délimitée par un premier corps (32) et un premier piston (31) mobile par rapport au premier corps (32) pour conférer un premier volume variable à la première chambre (33) étanche au premier gaz, ledit dispositif amortisseur (20) comportant un deuxième sous-ensemble amortisseur (40) muni d'une deuxième chambre (43) remplie par un deuxième gaz (44), la deuxième chambre étant délimitée par un deuxième corps (42) et par un deuxième piston (41) mobile par rapport au deuxième corps (42) pour conférer un deuxième volume variable à la deuxième chambre (43) étanche au deuxième gaz, la première chambre (33) présentant une première pression (P1) qui est maximale dans une position de repos de l'atterrisseur (10) précédent un atterrissage, la deuxième chambre (43) présentant une deuxième pression (P2) qui est minimale dans la position de repos, la première pression (P1) du premier gaz (34) dans la première chambre (33) diminuant lorsque la deuxième pression (P2) du deuxième gaz (44) dans la deuxième chambre (43) augmente lors d'un enfoncement de l'atterrisseur lors d'un atterrissage.

2. Atterrisseur selon la revendication 1,
dans lequel ladite au moins une roue (15) est mobile conjointement avec le premier piston (31) et le deuxième piston (41) ou ladite au moins une roue (15) est mobile conjointement avec le premier corps (32) et le deuxième corps (42).

3. Atterrisseur selon l'une quelconque des revendications 1 à 2,
dans lequel le premier gaz (34) et le deuxième gaz (44) sont identiques.

4. Atterrisseur selon l'une quelconque des revendications 1 à 3,
dans lequel une tige de liaison (50) s'étend du premier piston (31) au deuxième piston (41).

5. Atterrisseur selon l'une quelconque des revendications 1 à 4,
dans lequel une tige de commande (60) est solidaire du premier piston (31), la tige de commande (60) s'étendant dans la première chambre (33) délimitée par le premier piston (31) et en dehors des premier corps (32) et deuxième corps (42), la tige de commande (60) étant reliée mécaniquement à ladite au moins une roue (15) ou à un support (5).

6. Atterrisseur selon la revendication 5,
dans lequel, la tige de commande (60) traverse le premier corps (32) pour être reliée mécaniquement à ladite au moins une roue (15), le deuxième corps (42) étant connecté audit support (5).

7. Atterrisseur selon la revendication 5,
dans lequel la tige de commande (60) traverse le premier corps (32) pour être reliée mécaniquement au support (5), le deuxième corps (42) étant connecté à ladite au moins une roue (15).

8. Atterrisseur selon la revendication 4,
dans lequel une tige de commande (60) est articulée à la tige de liaison (50), la tige de commande (60) étant reliée mécaniquement à ladite au moins une roue (15).

9. Atterrisseur selon l'une quelconque des revendications 5 à 7,
dans lequel le premier corps (32) est solidaire du deuxième corps (42).

10. Atterrisseur selon l'une quelconque des revendications 4 à 9,
dans lequel le premier piston (31) comporte une première surface (310) en contact avec le premier gaz (34), le deuxième piston (41) comportant une deuxième surface (410) en contact avec le deuxième gaz (44), un premier produit d'une première superficie (S1) de la première surface (310) et de la première pression (P1) maximale dans la position de repos étant inférieur à un deuxième produit d'une deuxième superficie (S2) de la deuxième surface (410) et de la deuxième pression (P2) minimale dans la position de repos.

11. Atterrisseur selon l'une quelconque des revendications 1 à 3,
dans lequel l'atterrisseur (10) comporte une jambe de train (11) mobile en rotation autour d'un axe de pivotement (12), la jambe de train (11) portant ladite au moins une roue (15), une première connexion mécanique (70) s'étendant du premier piston (31) ou du premier corps (32) à la jambe de train (11), une deuxième connexion mécanique (75) s'étendant du deuxième piston (41) ou du deuxième corps (42) à la jambe de train (11), la première connexion mécanique (70) et la deuxième connexion mécanique (75) étant articulées à la jambe de train (11) de part et d'autre de l'axe de pivotement (12), la deuxième connexion mécanique (75) étant articulée à la jambe de train (11) entre l'axe de pivotement (12) et un axe de rotation (16) de ladite au moins une roue (15) par rapport à la jambe de train (11).

12. Atterrisseur selon la revendication 11,
dans lequel le premier piston (31) comporte une première surface (310) en contact avec le premier gaz (34), le deuxième piston (41) comportant une deuxième surface (410) en contact avec le deuxième gaz (44), un premier produit d'une première superficie (S1) de la première surface (310) et de la première pression (P1) maximale et d'une première distance (D1) entre la première connexion mécanique (70) et l'axe de pivotement (12) dans la position de repos étant inférieur à un deuxième produit d'une deuxième superficie (S2) de la deuxième surface (410) et de la deuxième pression (P2) minimale et d'une deuxième distance (D2) entre la deuxième connexion mécanique (75) et l'axe de pivotement (12) dans la position de repos.

13. Atterrisseur selon l'une quelconque des revendications 1 à 12,
dans lequel au moins un des premier piston (31) et deuxième piston (41) comprend une cavité (81, 83) annulaire ouverte sur le premier corps (32) ou du deuxième corps (42) respectif, un fluide de lubrification (82, 84) étant maintenu dans ladite cavité (81, 83).

14. Aéronef (1) muni d'au moins un atterrisseur (10),
dans lequel ledit au moins un atterrisseur (10) est selon l'une quelconque des revendications 1 à 13.

## Patentansprüche

1. Fahrwerk (10) mit mindestens einem Rad (15), das mit einer Dämpfungsvorrichtung (20) zusammenwirkt,
bei dem die Dämpfungsvorrichtung (20) eine erste Dämpfungsuntereinheit (30) mit einer ersten Kammer (33) umfasst, die mit einem ersten Gas (34) gefüllt ist, wobei die erste Kammer (33) durch einen ersten Körper (32) und einen ersten Kolben (31) begrenzt ist, der in Bezug auf den ersten Körper (32) beweglich ist, um der ersten Kammer (33), die gegen das erste Gas dicht ist, ein erstes variables Volumen zu verleihen, und die Dämpfungsvorrichtung (20) eine zweite Dämpfungsuntereinheit (40) mit einer zweiten Kammer (43) umfasst, die mit einem zweiten Gas (44) gefüllt ist, wobei die zweite Kammer durch einen zweiten Körper (42) und durch einen zweiten Kolben (41) begrenzt ist, der in Bezug auf den zweiten Körper (42) beweglich ist, um der zweiten Kammer (43), die gegen das zweite Gas dicht ist, ein zweites variables Volumen zu verleihen, wobei die erste Kammer (33) einen ersten Druck (P1) aufweist, der in einer Ruhestellung des Fahrwerks (10) vor einer Landung maximal ist, die zweite Kammer (43) einen zweiten Druck (P2) aufweist, der in der Ruheposition minimal ist, und der erste Druck (P1) des ersten Gases (34) in der ersten Kammer (33) abnimmt, wenn der zweite Druck (P2) des zweiten Gases (44) in der zweiten Kammer (43) bei einem Einsinken des Fahrwerks während einer Landung zunimmt.

2. Fahrwerk nach Anspruch 1, bei dem
das mindestens eine Rad (15) gemeinsam mit dem ersten Kolben (31) und dem zweiten Kolben (41) beweglich ist oder das mindestens eine Rad (15) gemeinsam mit dem ersten Körper (32) und dem zweiten Körper (42) beweglich ist.

3. Fahrwerk nach einem der Ansprüche 1 bis 2,
bei dem das erste Gas (34) und das zweite Gas (44) identisch sind.

4. Fahrwerk nach einem der Ansprüche 1 bis 3,
bei dem sich eine Verbindungsstange (50) vom ersten Kolben (31) zum zweiten Kolben (41) erstreckt.

5. Fahrwerk nach einem der Ansprüche 1 bis 4,
bei dem eine Steuerstange (60) fest mit dem ersten Kolben (31) verbunden ist, wobei sich die Steuerstange (60) in die von dem ersten Kolben (31) begrenzte erste Kammer (33) und außerhalb des ersten Körpers (32) und des zweiten Körpers (42) erstreckt, wobei die Steuerstange (60) mechanisch mit dem mindestens einen Rad (15) oder mit einem Träger (5) verbunden ist.

6. Fahrwerk nach Anspruch 5,
bei dem die Steuerstange (60) durch den ersten Körper (32) hindurchgeht, um mechanisch mit dem mindestens einen Rad (15) verbunden zu sein, und der zweite Körper (42) mit dem Träger (5) verbunden ist.

7. Fahrwerk nach Anspruch 5,
bei dem die Steuerstange (60) durch den ersten Körper (32) hindurchgeht, um mechanisch mit dem Träger (5) verbunden zu sein, und der zweite Körper (42) mit dem mindestens einen Rad (15) verbunden ist.

8. Fahrwerk nach Anspruch 4,
bei dem eine Steuerstange (60) gelenkig mit der Verbindungsstange (50) verbunden ist, und die Steuerstange (60) mechanisch mit dem mindestens einen Rad (15) verbunden ist.

9. Fahrwerk nach einem der Ansprüche 5 bis 7,
bei dem der erste Körper (32) fest mit dem zweiten Körper (42) verbunden ist.

10. Fahrwerk nach einem der Ansprüche 4 bis 9,
bei dem der erste Kolben (31) eine erste Oberfläche (310) in Kontakt mit dem ersten Gas (34) aufweist, der zweite Kolben (41) eine zweite Oberfläche (410) in Kontakt mit dem zweiten Gas (44) aufweist, und ein erstes Produkt aus einer ersten Fläche (S1) der ersten Oberfläche (310) und dem ersten maximalen Druck (P1) in der Ruheposition kleiner ist als ein zweites Produkt aus einer zweiten Fläche (S2) der zweiten Oberfläche (410) und dem zweiten minimalen Druck (P2) in der Ruheposition.

11. Fahrwerk nach einem der Ansprüche 1 bis 3,
wobei das Fahrwerk (10) ein Fahrwerksbein (11) aufweist, das um eine Schwenkachse (12) drehbar ist, wobei das Fahrwerksbein (11) das mindestens eine Rad (15) trägt, eine erste mechanische Verbindung (70) sich vom ersten Kolben (31) oder dem ersten Körper (32) zum Fahrwerksbein (11) erstreckt, eine zweite mechanische Verbindung (75) sich vom zweiten Kolben (41) oder dem zweiten Körper (42) zum Fahrwerksbein (11 ) erstreckt, die erste mechanische Verbindung (70) und die zweite mechanische Verbindung (75) auf beiden Seiten der Schwenkachse (12) gelenkig mit dem Fahrwerksbein (11) verbunden sind, und die zweite mechanische Verbindung (75) zwischen der Schwenkachse (12) und einer Drehachse (16) des mindestens einen Rades (15) in Bezug auf das Fahrwerksbein (11) gelenkig mit dem Fahrwerksbein (11) verbunden ist.

12. Fahrwerk nach Anspruch 11,
bei dem der erste Kolben (31) eine erste Oberfläche (310) aufweist, die mit dem ersten Gas (34) in Kontakt steht, der zweite Kolben (41) eine zweite Oberfläche (410) aufweist, die mit dem zweiten Gas (44) in Kontakt steht, ein erstes Produkt einer ersten Fläche (S1) der ersten Oberfläche (310) und des maximalen ersten Drucks (P1) und eines ersten Abstands (D1) zwischen der ersten mechanischen Verbindung (70) und der Schwenkachse (12) in der Ruhestellung kleiner ist als ein zweites Produkt einer zweiten Fläche (S2) der zweiten Oberfläche (410) und des minimalen zweiten Drucks (P2) und eines zweiten Abstands (D2) zwischen der zweiten mechanischen Verbindung (75) und der Schwenkachse (12) in der Ruhestellung.

13. Fahrwerk nach einem der Ansprüche 1 bis 12,
bei dem der erste Kolben (31) und/oder der zweite Kolben (41) einen ringförmigen Hohlraum (81, 83) umfasst, der sich zum jeweiligen ersten Körper (32) oder zweiten Körper (42) hin öffnet, wobei ein Schmierfluid (82, 84) in dem Hohlraum (81, 83) gehalten ist.

14. Luftfahrzeug (1) mit mindestens einem Fahrwerk (10),
wobei das mindestens eine Fahrwerk (10) nach einem der Ansprüche 1 bis 13 ist.

## Claims

1. Landing gear (10) provided with at least one wheel (15) cooperating with a shock absorber (20),
wherein said shock absorber (20) comprises a first shock absorber sub-assembly (30) provided with a first chamber (33) filled with a first gas (34), the first chamber (33) being delimited by a first body (32) and a first piston (31) movable relative to the first body (32) to impart a first variable volume to the first chamber (33) sealed to contain the first gas, said damper device (20) comprising a second shock absorber sub-assembly (40) provided with a second chamber (43) filled with a second gas (44), the second chamber being delimited by a second body (42) and by a second piston (41) movable relative to the second body (42) to impart a second variable volume to the second chamber (43) sealed to contain the second gas, the first chamber (33) having a first pressure (P1) that is at its maximum in a rest position of the landing gear (10) preceding a landing, the second chamber (43) having a second pressure (P2) that is at its minimum in the rest position, the first pressure (P1) of the first gas (34) in the first chamber (33) decreasing while the second pressure (P2) of the second gas (44) in the second chamber (43) increases when the landing gear is put under load during a landing.

2. Landing gear according to claim 1, wherein said at least one wheel (15) is movable jointly with the first piston (31) and the second piston (41) or said at least one wheel (15) is movable jointly with the first body (32) and the second body (42).

3. Landing gear according to any one of claims 1 to 2, wherein the first gas (34) and the second gas (44) are identical.

4. Landing gear according to any one of claims 1 to 3, wherein a connecting rod (50) extends from the first piston (31) to the second piston (41).

5. Landing gear according to any one of claims 1 to 4, wherein a control rod (60) is integral with the first piston (31), the control rod (60) extending into the first chamber (33) delimited by the first piston (31) and outside the first body (32) and second body (42), the control rod (60) being mechanically connected to said at least one wheel (15) or to a support (5).

6. Landing gear according to claim 5, wherein the control rod (60) passes through the first body (32) and is then mechanically connected to said at least one wheel (15), the second body (42) being connected to said support (5).

7. Landing gear according to claim 5, wherein the control rod (60) passes through the first body (32) and is then mechanically connected to the support (5), the second body (42) being connected to said at least one wheel (15).

8. Landing gear according to claim 4, wherein a control rod (60) is articulated to the connecting rod (50), the control rod (60) being mechanically connected to said at least one wheel (15).

9. Landing gear according to any one of claims 5 to 7, wherein the first body (32) is integral with the second body (42).

10. Landing gear according to any one of claims 4 to 9, wherein the first piston (31) comprises a first surface (310) in contact with the first gas (34), the second piston (41) comprising a second surface (410) in contact with the second gas (44), a first product of a first surface area (S1) of the first surface (310) and the first maximum pressure (P1) in the rest position being less than a second product of a second surface area (S2) of the second surface (410) and the second minimum pressure (P2) in the rest position.

11. Landing gear according to any one of claims 1 to 3, wherein the landing gear (10) comprises an undercarriage strut (11) movable in rotation around a pivot axis (12), the undercarriage strut (11) carrying said at least one wheel (15), a first mechanical connection (70) extending from the first piston (31) or the first body (32) to the undercarriage strut (11), a second mechanical connection (75) extending from the second piston (41) or the second body (42) to the undercarriage strut (11), the first mechanical connection (70) and the second mechanical connection (75) being articulated to the undercarriage strut (11) on either side of the pivot axis (12), the second mechanical connection (75) being articulated to the undercarriage strut between the pivot axis (12) and an axis of rotation (16) of said at least one wheel (15) relative to the undercarriage strut (11).

12. Landing gear according to claim 11, wherein the first piston (31) comprises a first surface (310) in contact with the first gas (34), the second piston (41) comprising a second surface (410) in contact with the second gas (44), a first product of a first surface area (S1) of the first surface (310) and the first maximum pressure (P1) and a first distance (D1) between the first mechanical connection (70) and the pivot axis (12) in the rest position being less than a second product of a second surface area (S2) of the second surface (410) and the second minimum pressure (P2) and a second distance (D2) between the second mechanical connection (75) and the pivot axis (12) in the rest position.

13. Landing gear according to any one of claims 1 to 12, wherein at least one of the first piston (31) and second piston (41) comprises an open annular cavity (81, 83) on the first body (32) or the respective second body (42), a lubricating fluid (82, 84) being held in said cavity (81, 83).

14. Aircraft (1) provided with at least one landing gear (10), wherein said at least one undercarriage (10) is according to any one of claims 1 to 13.
